# FASCICULE DE BREVET EUROPEEN

(11) **EP 2 321 436 B1**
(45) Date de publication et mention de la délivrance du brevet: **31.10.2012**
(21) Numéro de dépôt: 09794006.8
(22) Date de dépôt: 03.07.2009
(51) Int. Cl.: B23K 26/42, B23K 9/23, B23K 9/235, B23K 11/18, B23K 11/34, B23K 15/00, B23K 26/32

(54) **PROCEDE DE PREPARATION AVANT SOUDAGE DE PRODUITS EN ALLIAGE ALUMINIUM-LITHIUM**
VORBEREITUNGSVERFAHREN VOR DEM SCHWEISSEN VON PRODUKTEN AUS LITHIUM-ALUMINIUM-LEGIERUNG
METHOD OF PREPARATION PRIOR TO THE WELDING OF LITHIUM-ALUMINIUM ALLOY PRODUCTS

(30) Priorité: 07.07.2008 FR 0803849
(43) Date de publication de la demande: 18.05.2011
(73) Titulaire: Constellium France, 75008 Paris (FR)
(72) Inventeur: EBERL, Frank, F-63500 Issoire (FR); JAMBU, Stéphane, F-63400 CHAMALIERES (FR); BARTHELEMY, Christrian, F-38500 Voiron (FR); POUGET, Gaëlle, F-38100 Grenoble (FR)
(74) Mandataire: Butruille, Jean-Remi Pierre Marie
(86) Numéro de dépôt international: PCT/FR2009/000830
(87) Numéro de publication internationale: WO 2010/004132

(56) Documents cités:
- EP-A- 0 882 809
- RYAZANTSEV V I: "PREPARATION OF THE SURFACE OF ALUMINIUM ALLOYS FOR ARC WELDING" WELDING INTERNATIONAL, TAYLOR & FRANCIS, ABINGDON, GB, vol. 16, no. 9, 1 janvier 2002 (2002-01-01), pages 744-749, XP001126066 ISSN: 0950-7116
- ELLIS M B D: "FUSION WELDING OF ALUMINIUM-LITHIUM ALLOYS" WELDING AND METAL FABRICATION, IPC LTD. HAYWARDS HEATH, GB, vol. 64, no. 2, 1 février 1996 (1996-02-01), XP000555662 ISSN: 0043-2245

## Description

### Domaine de l'invention

La présente invention concerne un procédé de préparation avant sondage de produits en alliage aluminium-lithium.

### Etat de la technique

Les alliages d'aluminium et de lithium (Al-Li) sont reconnus depuis longtemps comme une solution efficace pour réduire le poids des éléments structuraux en raison de leur faible densité. Leur utilisation est systématiquement envisagée pour les structures aéronautiques les plus modernes. Par ailleurs, l'utilisation du soudage à la place des techniques habituelles de rivetage est également une tendance actuelle dans le domaine de la construction aéronautique. Il va donc de soi que pour être utilisés en construction aéronautique, les alliages Al-Li doivent de préférence pouvoir être soudés par fusion sans difficulté.

Le brevet US 5,032,359 décrit une famille d'alliages Al-Li soudables, les alliages Aluminium-Cuivre-Lithium-Magnésium-Argent. Ces alliages sont par ailleurs connus sous le nom commercial « WELDALITE® » ce qui insiste particulièrement sur leur soudabilité. Cependant, il a été reconnu dans ce brevet initial et dans la littérature ultérieure que ce type d'alliages était sensible lors du soudage à la formation de porosités. Le mécanisme à l'origine de ce problème est mal compris, il semble spécifique des alliages Al-Li.

Il est connu de ASM Handbook « Aluminum », 1991 pages 402-403 qu'une solution à ce problème peut être apportée en effectuant un pré-traitement, typiquement un décapage de la surface de l'ordre de 250 µm, juste avant d'effectuer le soudage. La disparition des porosités après soudage est alors observée. Cependant cette pratique présente plusieurs inconvénients : elle nécessite d'effectuer une étape de traitement de surface assez long avant le soudage ce qui complique le procédé de fabrication et peut être à l'origine d'investissement prohibitifs dans les usines qui ne sont pas équipées de lignes de traitement de surface. Ce traitement peut s'avérer difficile à réaliser de manière homogène, en particulier sur des profilés de forme complexe. Par ailleurs, un décapage chimique de l'ordre de 250 µm est difficile à réaliser de façon précise et pour des pièces de faible épaisseur, typiquement de l'ordre de 1 à 2 mm : un décapage sur les deux faces peut représenter environ 25 à 50 % de l'épaisseur finale ce qui pose des problèmes techniques de respect des tolérances en épaisseur et doit être pris en compte pour le dimensionnement des pièces. Enfin, ce traitement provoque une perte de métal qui est économiquement très défavorable, en particulier pour les pièces de faible épaisseur.

Le document Ellis M B D « Fusion welding of aluminium-lithium alloys » Welding and Metal Fabrication, IPC LTD. HAYWARDS HEATH, GB vol 64, n°2, 1 février 1996 page 44/56, 58, 60, indique également qu'il est nécessaire d'enlever 0.2 mm sur chaque face pour réaliser des soudures exemptes de porosités sur les alliages aluminium-lithium.

Le document Ryazantsev V I « Preparation of the surface of aluminium alloys for arc welding » Welding International, Taylor & Francis Abingdon, GB, viol. 16, n°9, 1 Janvier 2002 pages 744-749, décrit divers procédés de préparation de produits en alliage d'aluminium, notamment en alliage d'aluminium-lithium, incluant des étapes de dégraissage et décapage chimique et mise en solution dans un four sous vide.

Le brevet US 6,881,491 décrit un procédé de protection d'une surface d'aluminium apte à être revêtue de façon à éviter les soufflures lors de traitements thermiques. Ce procédé n'est pas destiné à une préparation de la surface avant soudage des alliages aluminium lithium.

De même, la demande de brevet EP-A-0 882 809 indique des traitements contenant de faibles quantités de fluor pour éviter l'oxydation, mais ne divulgue pas leur utilisation avant soudage ou pour des alliages aluminium-lithium.

Il existe donc un besoin pour un procédé de préparation de pièces en alliage aluminium lithium en vue d'être soudées, qui permette d'éviter la formation de porosités dans la soudure tout en évitant l'ensemble des inconvénients liés au décapage de la surface.

### Objet de l'invention

L'invention a pour objet un procédé de préparation d'un produit en alliage aluminium lithium pour le souder par fusion comprenant les étapes successives de
(i) approvisionner un produit corroyé à chaud en alliage d'aluminium comprenant au moins 0,8 % en poids de lithium,
(ii) optionnellement corroyer à froid le produit ainsi obtenu,
(iii) nettoyer au moins une surface destinée à être soudée du produit ainsi obtenu,
(iv) couvrir au moins une surface nettoyée du produit ainsi obtenu d'un revêtement ayant pour caractéristiques à sec une quantité comprise entre 0,1 et 5 mg/m2 et de préférence entre 0,5 et 4 mg/cm2 et une concentration en fluor d'au moins 10% en poids,
(v) effectuer une opération de mise en solution à une température supérieure à environ 450 °C suivie d'une trempe du produit ainsi obtenu.

### Description des figures

Figure 1 : classification de la qualité en termes de porosité des lignes de soudure
Figure 2 : profilés utilisés pour les essais

### Description détaillée de l'invention

Sauf mention contraire, toutes les indications concernant la composition chimique des alliages sont exprimées comme un pourcentage en poids basé sur le poids total de l'alliage. La désignation des alliages se fait en conformité avec les règlements de The Aluminium Association, connus de l'homme du métier. Les définitions des états métallurgiques sont indiquées dans la norme européenne EN 515. Sauf mention contraire, les définitions de la norme EN 12258 -1 s'appliquent. Les épaisseurs de produits filés sont définies selon la norme EN2066.

Par revêtement sec on entend l'état atteint par le revêtement lorsqu'il est sec sur toute son épaisseur comme défini par la norme ISO 9117-90, qui est différent d'un revêtement sec en surface alors que la grande majorité du revêtement n'est pas encore stabilisée.

Le procédé selon la présente invention est un procédé de préparation d'un produit en alliage aluminium lithium pour le souder par fusion. Par soudage par fusion on entend des procédés, tels que le soudage par point, le soudage par étincelage, le soudage laser, le soudage à l'arc, le soudage par faisceau d'électrons, dans lesquels la soudure est réalisée au-dessus du point de fusion de l'alliage aluminium-lithium, dans la phase liquide. Dans le cadre de la présente invention, on entend par alliage d'aluminium-lithium des alliages comprenant au moins 0,8 % en poids de lithium. Le procédé selon l'invention est particulièrement avantageux pour des alliages comprenant au moins 1,4 % en poids de lithium. Avantageusement le procédé selon la présente invention est appliqué à un produit en alliage sélectionné dans le groupe constitué des alliages 2090, 2091, 2196, 2097, 2197, 2297, 2397, 2099, 2199, 8090, 8091, 8093. Dans un mode de réalisation préféré, le procédé selon l'invention est appliqué à un produit en alliage 2196.

Dans une première étape, on approvisionne un produit corroyé à chaud en alliage aluminium lithium. Par corroyage, on entend une opération de déformation d'un bloc obtenu par exemple par coulée semi-continue. Le corroyage à chaud des alliages aluminium lithium s'effectue typiquement à une température de début de corroyage supérieure à 350 °C ou 400 °C. Les opérations de corroyage sont typiquement le laminage, le filage et le forgeage. Dans une réalisation préférée de l'invention le corroyage à chaud est le filage à chaud.

Le produit corroyé à chaud peut ensuite être dans une seconde étape optionnelle corroyé à froid de façon à obtenir un produit de plus faible épaisseur. Des opérations de corroyage à froid sont par exemple le laminage à froid, l'étirage et/ou le martelage.

Au moins une surface destinée à être soudée du produit corroyé à chaud et optionnellement corroyé à froid est ensuite nettoyée. Le nettoyage a pour but d'éliminer les principaux résidus provenant des étapes de corroyage. Ces résidus sont essentiellement des huiles de corroyage et des particules : oxydes et/ou particules métalliques. Le nettoyage peut être effectué par tout moyen approprié pour éliminer ces résidus. Le nettoyage n'est pas un décapage de la surface, ainsi l'épaisseur de métal éliminée lors du nettoyage est inférieure à 20 µm par face et de préférence inférieure à 10 µm par face. On réalise typiquement un nettoyage chimique à l'aide d'un solvant organique tel que par exemple un alcool, une cétone ou un alcane, ou d'un dégraissant alcalin tel que par exemple un dégraissant à base de soude, de potasse ou de carbonate de sodium, ou d'un dégraissant acide, tel que par exemple un dégraissant à base d'acide chromique, d'acide sulfurique ou d'acide phosphorique. On peut combiner plusieurs types de nettoyages. Cependant les présents inventeurs ont constaté que la combinaison de différents nettoyages, par exemple la combinaison d'un nettoyage basique et d'un nettoyage acide, n'apportait pas d'avantage technique et compliquait le procédé de façon inutile. De manière préférée on réalise donc le nettoyage à l'aide d'une seule famille : nettoyage par solvant organique ou nettoyage par dégraissage basique ou nettoyage par dégraissage acide. Dans une réalisation avantageuse de l'invention le nettoyage est effectué par traitement avec une solution aqueuse de pH supérieur à 9. Le nettoyage peut être suivi d'un rinçage de la surface, par exemple avec de l'eau déminéralisée.

La surface ainsi nettoyée est ensuite couverte d'un revêtement ayant pour caractéristiques à sec une quantité comprise entre 0,1 et 5 mg/cm² et de préférence entre 0,5 et 4 mg/cm² et une concentration en fluor d'au moins 10% en poids et de préférence d'au moins 25% en poids.

Le revêtement peut être déposé sous la forme d'une solution, typiquement par immersion ou pulvérisation ou sous forme de poudre, typiquement par poudrage électrostatique. Dans le cas du dépôt d'une solution, le solvant est ensuite évaporé par tout moyen approprié de façon à obtenir un revêtement sec. Dans le cas d'un dépôt sous forme de poudre, on peut obtenir directement un revêtement sec. De nombreux produits fluorés permettent d'atteindre la concentration en fluor souhaitée dans le revêtement sec. De manière avantageuse, le fluor est sous la forme d'un sel métallique de fluor ou de composé fluoré. Des exemples de sels utiles dans le cadre de l'invention sont donnés dans le Tableau 1. Les flux de la marque Nocolok® peuvent être utilisés avantageusement. Il s'agit pour la plupart de produits à base de fluorure d'aluminium et de potassium de formule générale KxAlyFz contenant éventuellement divers additifs.

**Tableau 1. Exemples de produits fluorés.**

| Produit fluoré | Poids Moléculaire (g) | Densité relative (H₂O = 1) | Point de fusion (°C) ou de décomposition (d) |
|---|---|---|---|
| NaBF4 | 109,79 | 2,47 | d 384 |
| K2SiF6 | 220,27 | 2,665 | d |
| KBF4 | 125,9 | 2,498 | d 350 |
| NH4HF2 | 57,04 | 1,5 | 125,6 |
| AlF3 | 83,98 | 2,882 | 1291 |
| CaF2 | 78,06 | 3,18 | 1423 |
| BaF2 | 175,53 | 4,89 | 1355 |
| BaSiF6 | 279,41 | 3,21 | d |
| Na2SiF6 | 188,06 | 2,679 | d |
| Cryolithe 3NaF, AlF3 | | 2,2 | 1040 |
| Nocolok® FLUX KxAlyFz | | 2,8 | 565 à 572 |
| Nocolok® Cs FLUX TM KxAlyFz >= 95% CsxAlyFz < 5% | | 2,8-3 | 558 - 568 |
| Nocolok® Zn FLUX KZnF3 > 99% | | 2,8 | 565-572 |

On préfère les produits se décomposant au moins partiellement lors de la mise en solution de façon à ne pas gêner le soudage par fusion. Cependant, les présents inventeurs ont constaté que les résidus de certains produits fluorés, et en particulier les produits à base de fluorure d'aluminium et de potassium ne causaient pas de difficulté lors du soudage par fusion, en raison probablement de leur point de fusion inférieur au point de fusion des alliages d'aluminium. L'ajout d'un fluorure d'aluminium et de césium est avantageux.

Avantageusement, le revêtement comprend un agent liant dont la concentration à sec est comprise entre 5% et 50% en poids. L'agent liant permet d'obtenir un dépôt homogène et reproductible du produit fluoré. Pour les revêtements déposés à partir d'une solution aqueuse, on utilise typiquement un épaississant, comme par exemple ceux utilisés dans l'industrie alimentaire, cosmétique ou des peintures. Le carboxymethylcellulose est un agent liant utile dans le cadre de l'invention. Un promoteur d'adhérence peut également être utilisé de façon avantageuse dans les revêtements déposés à partir d'une solution aqueuse. Parmi les promoteurs d'adhérence, les silanes sont particulièrement avantageux. Selon l'invention, le silane peut être tout silane de formule générale R'Si(OR)3, ou R' est un groupe contenant au moins un radical organique et où OR est un radical alkoxy. De préférence, on utilise un aminosilane ou un époxysilane tels que, par exemple, les silanes AMEO (3-aminopropyltriethoxysilane) ou Glymo : (3-glycidopropyltrimethoxysilane). Pour les revêtements déposés sous forme de poudre, l'agent liant est typiquement un composé polymère. Les polymères utiles dans le cadre de l'invention incluent les résines epoxy, les résines polyurethane, les résines polyoléfine, les résines polyacrylate, les résines polyester, les latex, résines alkylsilicone, les résines polyisocyanate. L'utilisation de résines alkylsilicone est préférée.

Dans un mode de réalisation de l'invention le revêtement est déposé à partir d'une solution aqueuse et comprend à se, en % en poids, entre 75% et 95% de NaBF₄, entre 0 et 15% de carboxymethylcellulose et entre 0 et 15% d'un silane. Avantageusement, le revêtement selon ce premier mode de réalisation ne comprend pas d'autre composant que NaBF₄, la carboxymethylcellulose le silane. Dans un second mode de réalisation de l'invention, le revêtement sec déposé de préférence par poudrage électrostatique comprend, en % en poids, entre 50% et 100% de K_{X}Al_{Y}F_{Z}, entre 0 et 5% de CsₓAl_{y}F et entre 0 et 50% en poids d'un agent liant, de préférence une résine alkylsilicone. Avantageusement, le revêtement selon ce second mode de réalisation ne comprend pas d'autre composant que KₓAl_{y}F_{z}, CsₓAl_{y}F et un agent liant.

Le nettoyage et le dépôt d'un revêtement ne sont pas nécessaires sur l'ensemble de la surface du produit car l'invention concerne l'amélioration de la qualité du joint soudé et seules les surfaces destinées à être soudées nécessitent donc un traitement. Cependant, il peut être avantageux d'effectuer ces étapes de nettoyage et dépôt sur la majorité ou de préférence sur l'ensemble de la surface du produit, car cela présente un avantage en termes de simplicité et de reproductibilité du traitement.

Après le dépôt du revêtement, on effectue une opération de mise en solution à une température supérieure à 450 °C suivie d'une trempe. Il s'agit d'une opération classique sur les alliages aluminium-lithium qui est effectuée à l'air ambiant ou sous une atmosphère plus faiblement oxydante telle que comprenant de l'argon, de l'hélium, du CO2, de l'azote, seuls ou en mélange. Un avantage de la présente invention est d'obtenir des soudures sans porosités quelle que soit l'atmosphère utilisée lors du traitement de mise en solution. L'invention peut également être avantageuse dans le cas où on réalise des traitements thermiques d'adoucissement intermédiaires à une température supérieure à 250 °C ou 300 °C au cours des étapes de déformation à froid, par exemple entre des passes de laminage à froid de tôles ou d'étirage de tubes.

Optionnellement on nettoie au moins une surface couverte d'un revêtement du produit mis en solution ainsi obtenu. Au cours des étapes de mise en solution et trempe le revêtement est au moins partiellement éliminé. Dans certains cas, des résidus du revêtement restent présents en surface. Ces résidus peuvent donner un aspect indésirable au produit et/ou s'avérer gênants lors des opérations de soudage. Ils peuvent être si nécessaire nettoyés, les conditions de nettoyage déjà décrites étant appropriées. Sur ce point, les revêtements comprenant un produit fluoré de type NaBF4 ou KBF4 sont avantageux car dans les conditions de l'invention, aucun résidus apparent visuellement ne subsiste après mise en solution et trempe. Les revêtements comprenant un produit fluoré de type KxAlyFz et/ou CsxAlyFz sont également avantageux car dans les résidus qui subsistent après mise en solution et trempe ne gênent pas les opérations de soudage par fusion.

Après ou avant l'étape optionnelle de nettoyage qui suit la mise en solution, on peut si nécessaire effectuer des étapes de déformation à froid et/ou planage et/ou redressage et/ou mise en forme et/ou revenu habituelles pour ce type de produit.

Le produit issu du procédé de préparation selon l'invention est apte à être soudé par fusion. Le soudage par fusion est effectué par toute technique de soudage par fusion. Dans un mode de réalisation de l'invention, on réalise le soudage par fusion par soudage laser sous atmosphère inerte. La préparation réalisée assure une grande stabilité au produit en alliage aluminium-lithium, le soudage par fusion peut si nécessaire être effectué plusieurs semaines après la fin du traitement. Grâce à la préparation du produit selon l'invention, on obtient des soudures par fusion substantiellement exemptes de porosités. La propension élevée des soudures réalisées sur des alliages aluminium-lithium à former des porosités étant mal comprise, le mécanisme expliquant l'efficacité du traitement selon l'invention est particulièrement difficile à élucider. Sans être liés à une théorie en particulier, les présents inventeurs pensent que le revêtement interagit de façon synergique avec l'hydrogène présent dans l'atmosphère et le lithium présent dans l'alliage, lors de la mise en solution.

L'invention est particulièrement avantageuse quand le produit corroyé à chaud et optionnellement corroyé à froid est un produit un produit laminé ou filé d'épaisseur inférieure à 5 mm et de préférence inférieure à 2 mm. En effet, plus l'épaisseur du produit est faible, plus le procédé connu de décapage avant soudage s'avère délicat à réaliser de façon fiable et plus le respect des tolérances en épaisseur du produit est problématique.

Ainsi l'invention permet la fabrication d'un assemblage soudé par fusion, avec une soudure substantiellement exempte de porosités, entre un premier membre en alliage d'aluminium comprenant au moins 1,4 % en poids de lithium et au moins un second membre en alliage métallique dans lequel le premier membre est un produit laminé ou filé d'épaisseur inférieure à 5 mm et de préférence inférieure à 2 mm, ayant été préparé par le procédé selon l'invention. Avantageusement, la tolérance en épaisseur du premier membre est plus ou moins 0,20 mm, de préférence plus ou moins 0,15 mm et de manière encore plus préférée plus ou moins 0,10 mm. Le premier membre et le second membre sont des produits corroyés, typiquement un profilé, une tôle, un tube, une barre ou une pièce forgée. La possibilité d'atteindre une telle tolérance en épaisseur notamment pour des produits de faible épaisseur est un avantage technique de l'invention car avec les procédés selon l'art antérieur, utilisant un décapage chimique de 0,2 mm à 0,25 mm sur chaque face pouvant représenter environ 25 à 50 % de l'épaisseur finale du produit, il est difficile d'atteindre de telles tolérances.

L'invention est particulièrement avantageuse quand les deux membres de l'assemblage soudé sont en alliage d'aluminium-lithium car il est plus difficile dans ce cas d'obtenir des soudures substantiellement exemptes de porosités. Dans une réalisation avantageuse de l'invention, l'assemblage soudé comprend au moins un second membre en alliage d'aluminium comprenant au moins 0,8% en poids de lithium.

Dans un autre mode de réalisation de l'invention, le second membre est un alliage de titane et l'assemblage est de préférence une opération de « soudage-brasage » dans laquelle il y a fusion du membre en alliage aluminium lithium mais pas de fusion du membre en alliage de titane.

Dans encore un autre mode de réalisation, le second membre est en un quelconque produit soudable par fusion avec le premier membre, notamment un quelconque alliage d'aluminium.

Dans un mode de réalisation avantageux de l'invention le premier membre est un profilé, de manière préférée en alliage 2196 et le second membre est une tôle ou un profilé.

Les assemblages soudés selon l'invention trouvent des applications particulièrement avantageuses dans la construction aéronautiques en ce qui concerne la fabrication d'éléments de structure. Le terme « élément de structure » se réfère à un élément utilisé en construction mécanique pour lequel les caractéristiques mécaniques statiques et / ou dynamiques ont une importance particulière pour la performance et l'intégrité de la structure, et pour lequel un calcul de la structure est généralement prescrit ou effectué. Il s'agit typiquement d'une pièce mécanique dont la défaillance est susceptible de mettre en danger la sécurité de ladite construction, de ses utilisateurs, de ses usagers ou d'autrui. Pour un avion, ces éléments de structure comprennent notamment les éléments qui composent le fuselage (tels que la peau de fuselage (fuselage skin en anglais), les raidisseurs ou lisses de fuselage (stringers), les cloisons étanches (bulkheads), les cadres de fuselage (circumferential frames), les ailes (tels que la peau de voilure (wing skin), les raidisseurs (stringers ou stiffeners), les nervures (ribs) et longerons (spars)) et l'empennage composé notamment de stabilisateurs horizontaux et verticaux (horizontal or vertical stabilisers), ainsi que les profilés de plancher (floor beams), les rails de sièges (seat tracks) et les portes.

Dans un mode de réalisation préféré, les assemblages soudés selon l'invention sont utilisés pour la fabrication de panneaux de fuselage.

### EXEMPLES

### Exemple 1 - Comparatif

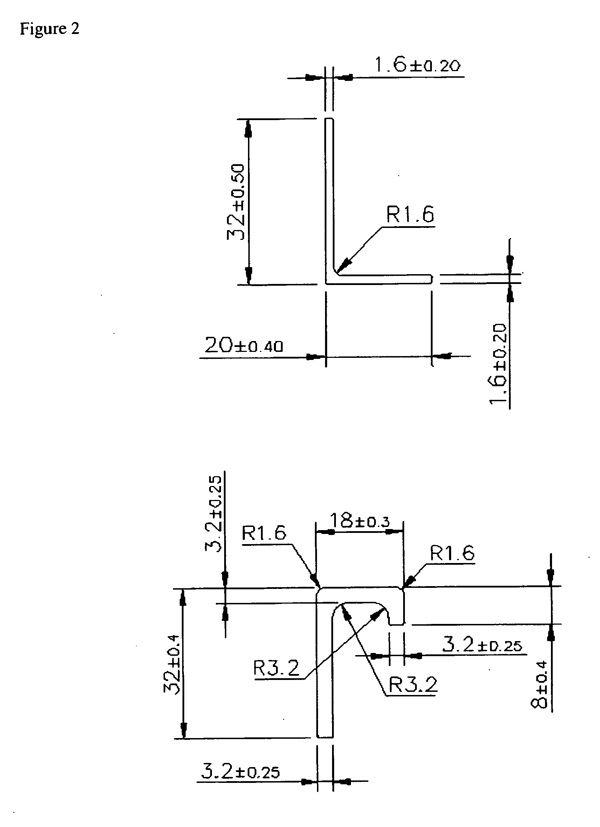

Dans cet exemple comparatif, des profilés en alliage AA2196 d'épaisseur 1,6 mm et 3,2 mm à l'état T4 ont été soudés par fusion. Les sections des profilés d'épaisseur 1,6 mm et d'épaisseur 3,2 mm sont présentées sur la Figure 2. La mise en solution était de 45 minutes à 524 °C. Les lignes de soudage ont été effectuées par soudage laser avec un fil d'apport en alliage 4047, à une puissance de 2300W et une vitesse de soudage de 5,4 m/min, sous une atmosphère constituée d'un mélange Ar (30%) / He (70%).

Un décapage d'épaisseur contrôlée comprise entre 0 et 300 µm par face à été réalisé à l'aide d'un décapant alcalin.

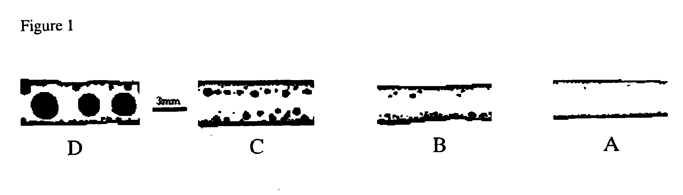

La présence de porosités dans les soudures obtenues a été caractérisée par imagerie aux rayons X. La Figure 1 illustre 4 niveaux de porosités utilisés pour évaluer les résultats obtenus. Le niveau A correspond à la présence d'au plus un très faible nombre de pores, la soudure est substantiellement exempte de porosité, la qualité de la soudure est bonne. Le niveau B correspond à une densité de pores supérieure à celle du niveau A, le diamètre des pores restant inférieur à 0,5 mm. Le niveau C correspond à une densité encore supérieure à celle du niveau B, le diamètre des pores restant inférieur à 1,5 mm. Le niveau D correspond à une densité élevée de pores, certains pores ayant un diamètre supérieur à 1,5 mm.

Les résultats obtenus sont présentés dans le tableau 2. Un décapage de 200 µm à 250 µm s'avère nécessaire pour obtenir des lignes de soudure substantiellement exemptes de porosités.

**Tableau 2. Qualité des lignes de soudure pour différentes conditions de décapage.**

| | Profilés d'épaisseur 1,6 mm | | Profilés d'épaisseur 3,2 mm | |
|---|---|---|---|---|
| Décapage | Référence Echantillon | Qualité de soudure en termes de porosité | Référence Echantillon | Qualité de soudure en termes de porosité |
| 0 µm | M1 | D | E1 | C |
| 20 µm | M2 | D | E2 | D |
| 50 µm | M3 | D | E3 | c |
| 100 µm | M4 | C | E4 | B |
| 200 µm | M5 | A | E5 | B |
| 250 µm | M6 | A | E6 | A |
| 300 µm | M7 | A | E7 | A |

### Exemple 2

Dans cet exemple comparatif, profilés en alliage AA2196 d'épaisseur 1,6 mm dont la section est décrite sur la Figure 2 ont été revêtus avec les produits indiqués dans le tableau 3, après avoir subi un nettoyage en milieu alcalin suivi d'un rinçage à l'eau permutée et d'un traitement de neutralisation à l'acide nitrique 58% en volume pendant 1 minute et d'un rinçage à l'eau permutée. Après séchage du revêtement, la quantité déposée a été mesurée et les profilés ont été mis en solution, trempés avant de subir des lignes de soudage dans des conditions identiques à celles de l'exemple 1. Les résultats en termes de qualité de ligne de soudure sont indiqués dans le tableau 3 également.

**Tableau 3. Conditions de revêtement utilisées**

| Référence | Produit actif | Liant 1 | Liant 2* | Solvant | Technique enduction | Quantité déposée (mg/cm2) | Qualité de soudure en termes de porosité |
|---|---|---|---|---|---|---|---|
| **AA1*** | | | | | | | C |
| **AA2*** | | | | | | | D |
| **BB1** | NaBF4 161,5 g/kg | silane Glymo 10 g/kg | CMC 6,75 g/l | eau | immersion | 0,63 | B |
| **BB2** | NaBF4 161,5 g/kg | silane Glymo 10 g/kg | CMC 6,75 g/l | eau | immersion | 0,62 | B |
| **LL1** | NaBF4 161,5 g/kg | silane Glymo 5 g/kg | CMC 6,75 g/l | eau | immersion | 0,4 | A-B |
| **LL2** | NaBF4 161,5 g/kg | silane Glymo 5 g/kg | CMC 6,75 g/l | eau | immersion | 0,37 | A-B |
| **CC1** | NaBF4 845 g/kg | SILRES® MK 155 g/kg | 0 | non | Poudrage électrostatique | 1,66 | B |
| **CC2** | NaBF4 845 g / kg | SILRES® MK 155 g/kg | 0 | non | Poudrage électrostatique | 1,29 | B |
| **JJI** | KBF4 169 g/kg | silane Glymo 10 g/kg | CMC 6,75 g/l | eau | immersion | 0,1 | C |
| **JJ2** | KBF4 169 g/kg | silane Glymo 10 g/kg | CMC 6,75 g/l | eau | immersion | 0,13 | B |
| **DD1*** | B203 60 g / kg | SILRES® MK 50 g/kg | 0 | non | Poudrage électrostatique | 2,67 | B |
| **DD2*** | B203 60 g / kg | SILRES® MK 50 g/kg | 0 | non | Poudrage électrostatique | 1,77 | B |
| **GG1*** | TiB2 100 g /kg | SILRES® MK 17 g/kg | 0 | non | Poudrage électrostatique | 1,17 | D |
| **GG2*** | TiB2 100 g/kg | SILRES® MK 17g/kg | 0 | non | Poudrage électrostatique | 0,98 | D |
| **KK1*** | TiB2 100 g/kg | Silane Améo 10 g/kg | 0 | eau | Pinceau | 7,6 | D |
| **KK2*** | TiB2 100 g/kg | Silane Améo 10 g/kg | 0 | eau | Pinceau | 6,6 | D |

| | | | | | | | |
|---|---|---|---|---|---|---|---|
| * CMC : carboxy-methyl cellulose Silane AMEO : 3-aminopropyltriethoxysilane Silane Glymo : 3-glycidopropyttrimethoxysilane * Exemple comparatif | | | | | | | |

Par rapport aux échantillons de référence AA1 et AA2, la plupart des échantillons testés montrent une amélioration de la porosité des lignes de soudure mis à part les échantillons pour lesquels le produit actif est TiB2. Les échantillons traités avec B2O3 présentent de nombreux résidus en surface après mise en solution.

### Exemple 3

Des profilés d'épaisseur 1,6 mm en alliage AA2196 de section identique à celle des exemples précédents ont été obtenus par coulée de billettes dont la composition est fournie et filage à une température supérieure à 400 °C.

Des traitements de préparation de surface avant mise en solution ont été effectués. Tout d'abord un nettoyage dans une solution alcaline, suivi dans certains cas d'un traitement dans une solution acide. Trois types de traitements ont ensuite été effectués : un premier traitement à base de fluoroborate de sodium (NaBF₄), un second traitement à base d'oxyde de bore et un troisième traitement à base fluorure d'aluminium et de potassium (K_{X}Al_{Y}F_{Z}). Le traitement K_{X}Al_{Y}F_{Z} était à base du flux référencé par Nocolok®Cs FLUX TM, ce flux contenant entre 95 et 100 % de fluorure d'aluminium et de potassium K₂AlF₅ et moins de 5% de fluoroaluminate de césium CsAlF₄. Une résine polyméthylsiloxane SILRES® MK powder de la société Wacker Chimie a été ajoutée dans certaines compositions. Le silane glymo (glycidopropyltrimethoxysilane) a été ajouté au premier traitement.

Par ailleurs, différentes conditions de mise en solution ont été utilisées. Ainsi deux atmosphères de four ont été testées : atmosphère standard et atmosphère volontairement humidifiée de façon à créer des conditions plus sévères.

Les conditions utilisées et les résultats obtenus sont fournis dans le Tableau 4.

**Tableau 4. Conditions de revêtement utilisées.**

| | Nettoyage basique^{a} | Traitement acide^{b} | Revêtement | Mise en solution^{d} | Qualité soudure (porosité)^{e} |
|---|---|---|---|---|---|
| E1 * | Non | Non | Non | 1 | C |
| E2 * | Non | Non | Non | 2 | D |
| E3 | Oui | Non | NaBF4 | 1 | A |
| E4 | Oui | Non | NaBF4 | 2 | C |
| E5 | Oui | Oui | NaBF4 | 1 | A |
| E6 | Oui | Oui | NaBF4 | 2 | C |
| E7 * | Oui | Non | B2O3 | 1 | D |
| E8 * | Oui | Non | B2O3 | 2 | B-D |
| E9 * | Oui | Oui | B2O3 | 1 | A-D |
| E10 * | Oui | Oui | B2O3 | 2 | C |
| E11 | Oui | Non | K_{X}Al_{Y}F_{Z} | 1 | A |
| E12 | Oui | Non | K_{X}Al_{Y}F_{Z} | 2 | A |

| | | | | | |
|---|---|---|---|---|---|
| a 5 mn à 60 °C dans une solution Novaclean AL 708 ®, pH = 11 suivi d'un rinçage à l'eau déminéralisée b 1 mn dans une solution d'acide nitrique (50% en volume) suivi d'un rinçage à l'eau déminéralisée c NaBF4 : « NaBF₄ : 161 g/kg- silane glymo 10g/kg - Revêtement mouillant : 5g/kg - Epaississant CMC 9 g/kg Eau : 814 g/kg - 0,8 à 1 mg/cm2 (immersion) » B203 : « B₂O₃ (55% en poids) SILRES® MK powder (45% en poids) - 3 à 4,7 mg/cm² - Poudrage électrostatique » >= 95% K₂AlF₅ + < 5% CsAlF₄ : « Nocolok®Cs FLUX TM (70% en poids) SILRES® MK powder (30% en poids) - 2 à 3.5 mg/cm² - Poudrage électrostatique » d 1. : 45 mn 524°C - air standard 2 : 45 mn 524°C - air humide e. Voir Figure 1 * exemple comparatif | | | | | |

En l'absence de traitement de surface avant mise en solution, les porosités sont présentes dans tous les cas.

Le traitement NaBF4 permet d'obtenir des résultats satisfaisants dans la plupart des cas. Seul les conditions les plus sévères (45 mn 524°C - air humide) conduisent à une densité de porosités de niveau C. On note par ailleurs que le traitement acide après l'opération de nettoyage en milieu basique n'apporte aucun avantage, on obtient en effet des résultats exactement identiques avec ou sans ce traitement supplémentaire.

Le traitement B2O3 n'a pas permis d'obtenir des résultats favorables de façon homogène et reproductible. Pour cette raison, plusieurs niveaux de densité de porosités observés localement ont été indiqués. De plus, de nombreux résidus sont observés en surface après les étapes de mise en solution et trempe. Un nettoyage supplémentaire (nettoyage basique et traitement acide) de la surface après mise en solution et trempe et avant soudage permet d'éliminer la plupart de ces résidus et on note alors une amélioration de la densité de porosité, sans toutefois atteindre une qualité acceptable de niveau A de façon homogène et reproductible.

Le traitement K_{X}Al_{Y}F_{Z} a permis d'obtenir d'excellents résultats (niveau A) pour l'ensemble des conditions de mise en solution testées. De plus l'absence de résidus néfastes pour le soudage en surface permet d'éviter de réaliser un traitement de nettoyage après mise en solution.

## Revendications

1. Procédé de préparation d'un produit en alliage aluminium lithium pour le souder par fusion comprenant les étapes successives de
(i) approvisionner un produit corroyé sol chaud en alliage d'aluminium comprenant au moins 0,8 % en poids de lithium,
(ii) optionnellement corroyer à froid le produit ainsi obtenu,
(iii) nettoyer au moins une surface destinée à être soudée du produit ainsi obtenu,
(iv) couvrir au moins une surface nettoyée du produit ainsi obtenu d'un revêtement ayant pour caractéristiques à sec une quantité comprise entre 0,1 et 5 mg/cm² et de préférence entre 0,5 et 4 mg/cm² et une concentration en fluor d'au moins 10% en poids,
(v) effectuer une opération de mise en solution à une température supérieure à 450 °C suivie d'une trempe du produit ainsi obtenu.

2. Procédé selon la revendication 1 dans lequel ledit alliage d'aluminium comprend au moins 1,4% on poids de lithium.

3. Procédé selon la revendication 2 dans lequel ledit alliage d'aluminium est sélectionné dans le groupe constitué des alliages 2090, 2091, 2196, 2097, 2197, 2297, 2397, 2099, 2199, 8090, 8091, 8093.

4. Procédé selon une quelconque des revendications 1 à 3 dans lequel le produit corroyé à chaud et optionnellement corroyé à froid est un produit un produit laminé ou filé d'épaisseur inférieure à 5 mm et de préférence inférieure à 2 mm.

5. Procédé selon une quelconque des revendications 1 à 4 dans lequel le nettoyage de l'étape (iii) est effectué par traitement avec une solution aqueuse de pH supérieur à 9.

6. Procédé selon une quelconque des revendications 1 à 5 dans lequel les étapes (iii) et (iv) sont effectuées sur la majorité ou de préférence sur l'ensemble de la surface dudit produit.

7. Procédé selon une quelconque des revendications 1 à 6 dans lequel ledit revêtement comprend un agent liant dont la concentration à sec est comprise entre 5% et 50% en poids.

8. Procédé selon une quelconque des revendications 1 à 7 dans lequel ledit revêtement consiste en, à sec, en % en poids, entre 75% et 95% de NaBF₄ entre 0 et 15% en poids de carboxymethylcellulose et entre 0 et 15% d'un silane.

9. Procédé selon une quelconque des revendications 1 à 6 dans lequel ledit revêtement consiste en, après séchage, en % en poids, entre 50% et 100% de K_{X}Al_{Y}F_{Z} entre 0% et 5% de Cs_{X}Al_{Y}F_{Z} et entre 0 et 50% en poids d'un agent liant.

10. Procédé selon la revendication 9 dans lequel ledit agent liant est une résine alkylsilicone.

11. Procède selon la revendication 9 ou la revendication 10 dans lequel ledit revêtement est déposé par poudrage électrostatique.

## Claims

1. Process for preparing an aluminum lithium alloy product to be fusion-welded including the following steps:
(i) procuring a hot-worked aluminum alloy product including at least 0.8% of lithium by weight,
(ii) optionally cold-working the product so obtained,
(iii) cleaning at least one surface to be welded of the product so obtained,
(iv) covering at least one cleaned surface of the product so obtained with a coating whose characteristics when dry are a quantity ranging between 0.1 and 5 mg/cm² and preferably between 0.5 and 4 mg/cm² and a fluorine concentration of at least 10% by weight,
(v) performing a solution heat-treatment at a temperature greater than approximately 450°C followed by quenching of the product so obtained.

2. Process according to the claim 1 in which said aluminum alloy comprises at least 1.4% of lithium by weight.

3. Process according to claim 2 in which said aluminum alloy is selected from the group made up of alloys 2090, 2091, 2196, 2097, 2197, 2297, 2397, 2099, 2199,8090,8091,8093.

4. Process according to any of claims 1 to 3 in which the hot-worked and optionally cold-worked product is a flat-rolled or extruded product with thickness lower than 5 mm and preferably lower than 2 mm.

5. Process according to any of claims 1 to 4 in which the cleaning of stage (iii) is carried out by treatment with an aqueous solution with a pH greater than 9.

6. Process according to any of claims 1 to 5 in which stages (iii) and (iv) are carried out on the majority of, or preferably on the whole, surface of said product.

7. Process according to any of claims 1 to 6 in which said coating comprises a binder whose concentration when dry ranges between 5% and 50% by weight.

8. Process according to any of claims 1 to 7 in which said coating comprises when dry, as a percentage by weight, between 75% and 95% of NaBF4, between 0 and 15% by weight of carboxymethyl cellulose and between 0 and 15% of a silane.

9. Process according to any of claims 1 to 6 in which said coating comprises after drying, as a percentage by weight, between 50% and 100% of KxAlyFz, between 0 and 5% by weight of CsxAlyFz and between 0 and 50% of a binder.

10. Process according to claim 9 in which said binder is an alkyl silicone resin.

11. Process according to claim 9 or claim 10 in which said coating is deposited by electrostatic powdering.

## Patentansprüche

1. Verfahren zum Herstellen eines Produkts aus einer Aluminium-Lithium-Legierung zum Schmelzschweißen mit den aufeinanderfolgenden Schritten:
(i) Bereitstellen eines warm umgeformten Produkts aus einer Aluminiumlegierung, die mindestens 0,8 Gew.-% Lithium aufweist,
(ii) optional Kaltumformen des so gewonnenen Produkts,
(iii) Reinigen mindestens einer zu schweißenden Oberfläche des so gewonnenen Produkts,
(iv) Aufbringen einer Beschichtung auf mindestens eine gereinigte Oberfläche des so gewonnenen Produkts, wobei die Beschichtung als Merkmale im trockenen Zustand eine Menge zwischen 0,1 und 5 mg/cm² und vorzugsweise zwischen 0,5 und 4 mg/cm² und eine Konzentration an Fluor von mindestens 10 Gew.-% aufweist,
(v) Lösungsglühen bei einer Temperatur oberhalb 450 °C und anschließendes Abschrecken des so gewonnenen Produkts.

2. Verfahren nach Anspruch 1, bei dem die Aluminiumlegierung mindestens 1,4 Gew.-% Lithium aufweist.

3. Verfahren nach Anspruch 2, bei dem die Aluminiumlegierung aus der Gruppe bestehend aus den Legierungen 2090, 2091, 2196, 2097, 2197, 2297, 2397, 2099, 2199, 8090, 8091, 8093 ausgewählt ist.

4. Verfahren nach irgendeinem der Ansprüche 1 bis 3, bei dem das warm umgeformte und optional kalt umgeformte Produkt ein Walz- oder Strangpressprodukt mit einer Dicke kleiner 5 mm und vorzugsweise kleiner 2 mm ist.

5. Verfahren nach irgendeinem der Ansprüche 1 bis 4, bei dem das Reinigen in Schritt (iii) mittels Behandlung mit einer wässrigen Lösung erfolgt, deren pH-Wert größer ist als 9.

6. Verfahren nach irgendeinem der Ansprüche 1 bis 5, bei dem die Schritte (iii) und (iv) auf dem größten Teil der Oberfläche oder bevorzugt auf der gesamten Oberfläche des Produkts durchgeführt werden.

7. Verfahren nach irgendeinem der Ansprüche 1 bis 6, bei dem die Beschichtung einen Füllstoff aufweist, dessen Konzentration im trockenen Zustand zwischen 5 und 50 Gew.-% liegt.

8. Verfahren nach irgendeinem der Ansprüche 1 bis 7, bei dem die Beschichtung im trockenen Zustand, in Gewichtsprozent, aus 75 bis 95% NaBF₄, 0 bis 15 Gew.-% Carboxymethylcellulose und 0 bis 15% eines Silans besteht.

9. Verfahren nach irgendeinem der Ansprüche 1 bis 6, bei dem die Beschichtung nach dem Trocknen, in Gewichtsprozent, aus 50 bis 100% KₓAl_{y}F_{z}, 0 bis 5% CsₓAl_{y}F_{z} und 0 bis 50 Gew.-% eines Füllstoffs besteht.

10. Verfahren nach Anspruch 9, bei dem der Füllstoff ein Alkylsilikonharz ist.

11. Verfahren nach Anspruch 9 oder Anspruch 10, bei dem die Beschichtung durch elektrostatische Pulverbeschichtung aufgetragen wird.
